# EUROPEAN PATENT APPLICATION

(11) **EP 1 346 888 A2**
(43) Date of publication of application: **24.09.2003**
(21) Application number: 03005372.2
(22) Date of filing: 12.03.2003
(51) Int. Cl.: B60R 25/10

(54) **Wireless entry system for vehicle**

(30) Priority: 14.03.2002 JP 2002070780
(71) Applicant: Calsonic Kansei Corporation, Tokyo 164-8602 (JP)
(72) Inventor: Nagano, Tetsuji, Nakano-ku, Tokyo 164-8602 (JP)
(74) Representative: Grünecker, Kinkeldey, Stockmair & Schwanhäusser Anwaltssozietät

(57) **Abstract**

A wireless device for a vehicle is provided with a portable transmitter and receiver unit having a transponder and a keyless circuitry, and an on-vehicle transmitter and receiver device having antennas and a controller adapted to communicate with the portable transmitter and receiver unit through the antennas and operative to transmit an identifier request signal to the portable transmitter and receiver unit while requesting the portable transmitter and receiver unit to transmit back an identifier signal for checking whether an ID code of the portable transmitter and receiver unit is proper. At least one of the antennas of the on-vehicle transmitter and receiver device is mounted at a terminal end of an instrument panel of the vehicle.

## Description

### BACKGROUND OF THE INVENTION

The present invention relates to a wireless system for vehicle and a related method and, more particularly, to a wireless system adapted to be performed in a vehicle, for use of a remote operating system such as a smart entry system, and its related method.

Various attempts have heretofore been made in the past to provide vehicular remote operating systems, and Japanese Patent Application Laid-Open Publication No. 2000-261245 discloses such a vehicular remote operating system.

Such a vehicular remote operating system is configured to serve as a smart entry device (that detects a person, who carries a portable transmitter and receiver unit, moving closer to and away from a vehicle to allow a door to be automatically locked or unlocked) and used as a smart ignition device (that detects the portable transmitter and receiver unit being located in a vehicular compartment for permitting an engine to be started up).

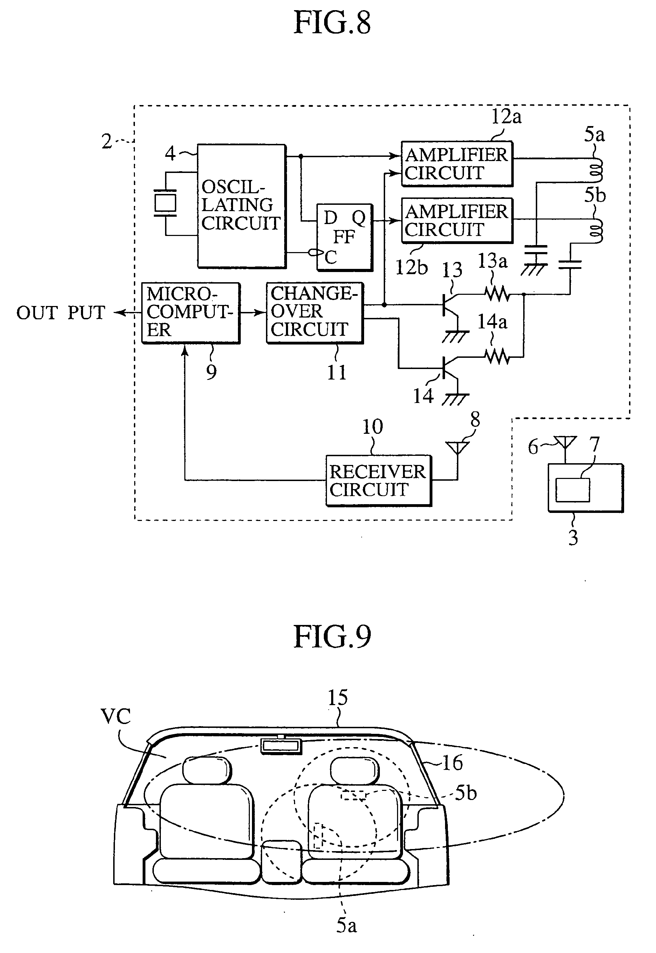

As shown in FIGS. 8 and 9, the vehicular remote operating system is comprised of an on-vehicle transmitter and receiver device 2 mounted to a vehicle 15 and a portable transmitter and receiver unit 3. The on-vehicle transmitter and receiver device 2 includes an oscillation circuit 4 that produces an output signal, amplifier circuits 12a, 12b and magnetic field generating coils (serving as antennas, respectively) 5a, 5b from which electric magnetic fields are intermittently produced within given areas in response to the output signal from the oscillation circuit 4 during a normal time period such that, when a driver carrying the portable transmitter and receiver unit 3 comes in the magnetic field area, a transmitter and receiver antenna 6 of the portable transmitter and receiver unit 3 is operative to detect such a magnetic field. The portable transmitter and receiver unit 3 is comprised of a microcomputer 7 that is responsive to this magnetic field to output a transmission signal, containing given ID code, to the on-vehicle transmitter and receiver device 2. An antenna 8 of the on-vehicle transmitter and receiver device 2 receive such a transmission signal, which in turn is inputted through a receiver circuit 10 to a microcomputer 9.

The microcomputer 9 is configured to check matching between received ID code and preset ID code and, in the presence of matching, generates a door lock control signal and an engine start permit signal on demand.

Further, the on-vehicle transmitter and receiver device 2 is comprised of a changeover circuit 11 that is controlled by the microcomputer 9 to allow the amplifier circuits 12a, 12b and associated transistor 13 to be intermittently turned on. When this takes place, a second magnetic field is intermittently generated from the magnetic field generating section 5b, whereas the first magnetic field is intermittently generated from the magnetic field generating section 5a. As a result, the first and second magnetic fields appear in areas as shown by dotted lines in FIG. 9.

### SUMMARY OF THE INVENTION

However, in a case where the on-vehicle transmitter and receiver device 2 cannot receive an output signal transmitted from the portable transmitter and receiver unit 3 for the given time interval in which the first and second magnetic fields are generated in a manner se set forth above, the changeover circuit 11 is applied with the output signal from the microcomputer 9, thereby rendering both the transistors 13, 14 to be turned on. When this takes place, since synthetic resistance between resistors 13a, 14a is lowered, resulting in an increase in the amount of electric current flowing through the magnetic field generating section 5b. Accordingly, the second magnetic field tends to have an increased magnetic field, with a resultant increase in the area where the magnetic field is exerted. That is, the area in which the magnetic field is exerted is widened toward an area outside the vehicle compartment VC to enable detection at such an area outside the vehicle compartment. In particular, as shown by a phantom line in FIG. 9, the area in which the second magnetic field is generated is expanded toward an area outside the vehicle compartment through a window 16 of the vehicle 15 such that when the portable transmitter and receiver unit 3 carried outside the vehicle 15 remains in the area shown by the phantom line, the presence of the portable transmitter and receiver unit 3 is detected.

Consequently, by compelling the changeover circuit 11 to switch over between widened and narrow detection area modes for the area in which the second magnetic field is generated, during the narrow area detection mode in which the magnetic field is generated in the narrow area, the magnetic field is generated only in the vehicle compartment, whereas during the widened area detection mode in which the magnetic field is generated in the widened area, the magnetic field is generated even in the area outside the vehicle compartment, enabling the microcomputer 9 to detect the portable transmitter and receiver unit 3 regardless of the same being located in either outside or inside the vehicle compartment.

However, with the related art system set forth above, it is a usual practice for the antennas to be mounted in seats at areas remotest from the vehicle windows, with a resultant deteriorated effect in emitting the magnetic fields toward the outside area.

The present invention has been completed with the above studies conducted by the present inventor and has an object to provide a wireless system and a related method for a vehicle which can address the above-described issues by allowing antennas to be mounted to an instrument panel at both terminal ends thereof closer to windows of a vehicle to provide an ease of mounting the antennas.

According to an aspect of the present invention, there is provided a wireless device for a vehicle having an instrument panel, the device comprising: a portable transmitter and receiver unit having a transponder and a keyless circuitry adapted to transmit an identifier signal, indicative of an identifier identifying the portable transmitter and receiver unit; and an on-vehicle transmitter and receiver device having antennas and a controller adapted to communicate with the portable transmitter and receiver unit through the antennas while the portable transmitter and receiver unit is located in a given communication area and operative to transmit an identifier request signal to the portable transmitter and receiver unit requesting the portable transmitter and receiver unit to transmit back to the controller the identifier signal for checking whether the identifier of the portable transmitter and receiver unit is proper, wherein upon verification by the controller that the identifier of the portable transmitter and receiver unit is performed, the controller is responsive to open or close a door of a vehicle and to permit an engine of the vehicle to be started up, and wherein at least one of the antennas is mounted at a terminal end of an instrument panel of the vehicle.

In the other words, according to another aspect of the present invention, there is provided a wireless device for a vehicle having an instrument panel, the device comprising: a portable transmitting and receiving means for transmitting an identifier signal indicative of an identifier identifying the portable transmitting and receiving means and receiving an identifier request signal; and an on-vehicle transmitting and receiving means for transmitting the identifier request signal to the portable transmitting and receiving means and receiving the identifier signal from the portable transmitting and receiving means, at least a part of the on-vehicle transmitting and receiving means being mounted at a terminal end of an instrument panel of a vehicle, wherein when a wireless communication between the portable transmitting and receiving means and the on-vehicle transmitting and receiving means is to be performed within the vehicle, and when the identifier of the portable transmitting and receiving means is not verified, the portable transmitting and receiving means is located in the vicinity of the at least a part of the on-vehicle transmitting and receiving means mounted at the terminal end of the instrument panel of the vehicle.

Besides, according to another aspect of the present invention, there is provided a method of performing wireless communication for a vehicle having an instrument panel, the method comprising: preparing a portable transmitter and receiver unit transmitting an identifier signal indicative of an identifier identifying the portable transmitter and receiver unit and receiving an identifier request signal; preparing an on-vehicle transmitter and receiver device transmitting the identifier request signal to the portable transmitter and receiver unit and receiving the identifier signal from the portable transmitter and receiver unit; mounting at least a part of the on-vehicle transmitter and receiver device at a terminal end of an instrument panel of a vehicle; and locating the portable transmitter and receiver unit in the vicinity of the at least a part of the on-vehicle transmitter and receiver unit mounted at the terminal end of the instrument panel of the vehicle, when a wireless communication between the portable transmitter and receiver unit and the on-vehicle transmitter and receiver device is to be performed within the vehicle, and when the identifier of the portable transmitter and receiver unit is not verified.

Other and further features, advantages, and benefits of the present invention will become more apparent from the following description taken in conjunction with the following drawings.

### BRIEF DESCRIPTION OF THE DRAWINGS

FIG. 1 is a block diagram illustrating a wireless system for a vehicle of a first embodiment according to the present invention;
FIG. 2 is a partial perspective view illustrating how antennas forming parts of the wireless system shown in FIG. 1 are mounted in the vehicle, in the first embodiment;
FIG. 3 is a partial cross sectional view of an instrument panel having an area closer to a driver's seat at which a low frequency external communication antenna is mounted in the vehicle, in the first embodiment;
FIGS. 4A and 4B show a flowchart illustrating an example of a general sequence of operations of a CPU forming part of the wireless system shown in FIG. 1 for carrying out a method of performing wireless communication, in the first embodiment;
FIGS. 5A and 5B show a flowchart illustrating an example of a general sequence of operations of the CPU forming part of the wireless system shown in FIG. 1 for carrying out a method of performing wireless communication, in a second embodiment according to the present invention;
FIG. 6A is a view illustrating a Table indicative of the relationship among occurrences of "coincidence" and "non-coincidence", strong and weakened magnitudes of low frequency electromagnetic waves generated when an engine start switch is depressed, and contents of associated controls, in the second embodiment;
FIG. 6B is a view illustrating a Table indicative of the relationship among occurrences of "coincidence" and "non-coincidence", strong and weakened magnitudes of low frequency electromagnetic waves generated when a door request switch is depressed, and contents of associated controls, in the second embodiment;
FIG. 7 is an enlarged schematic view illustrating a modified mounting structure of an instrument panel for the low frequency vehicle-outside antennas according to the present invention;
FIG. 8 is a schematic circuit diagram illustrating a wireless system for a vehicle employed in a related art; and
FIG. 9 is a schematic view of the vehicle for illustrating a situation where a magnetic field is generated

### DETAILED DESCRIPTION OF THE PREFERRED EMBODIMENTS

Reference is now made to the drawings to describe each embodiment of a wireless (radio frequency) system for a vehicle to carry out a method of performing wireless communication according to the present invention. Also, in the following description of each embodiment, the same component parts bear the same reference numerals throughout the drawings to simplify or omit the redundant description.

### (First Embodiment)

Initially, a first embodiment according to the present invention is described.

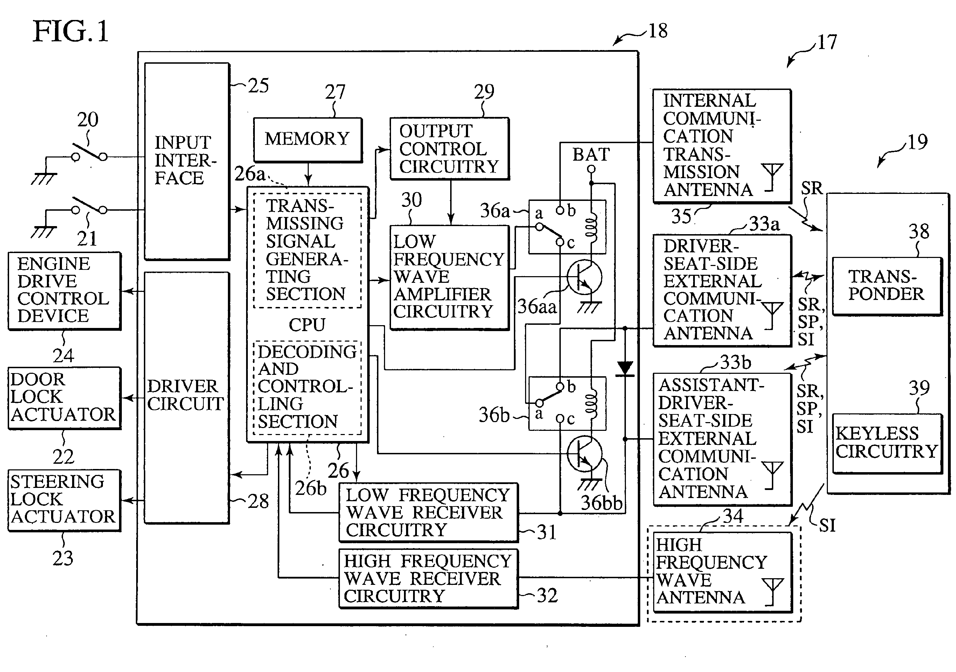

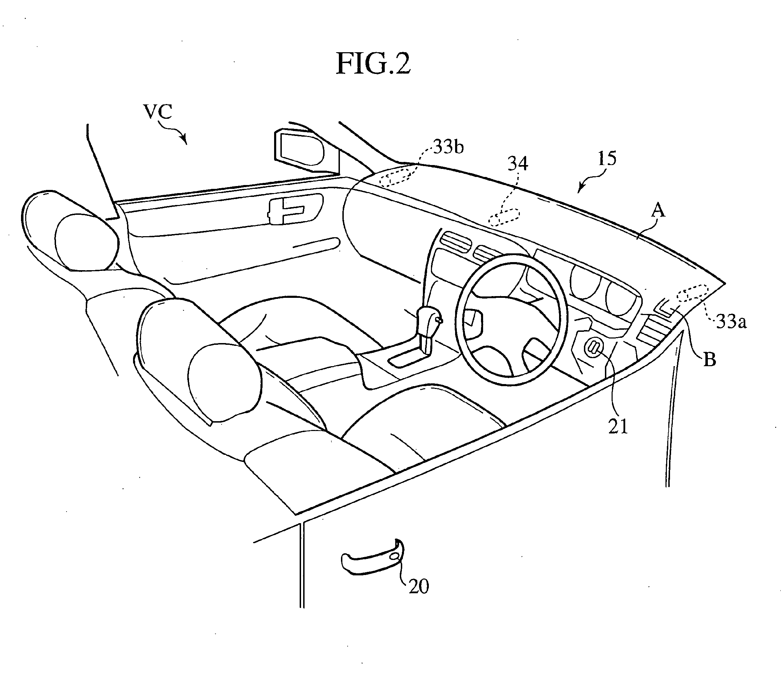

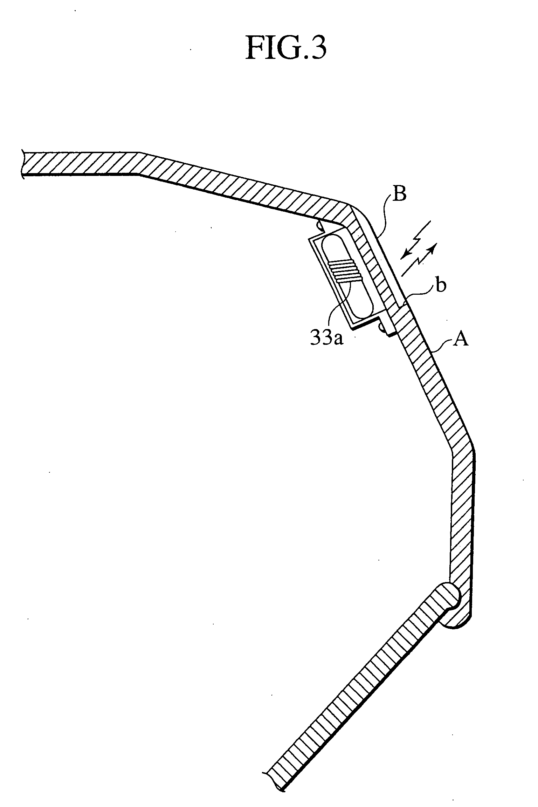

Referring to FIGS. 1 to 3, there is shown a structure of a vehicular wireless system of the first embodiment according to the present invention. FIG. 1 is a block diagram illustrating a wireless system for a vehicle of the presently filed embodiment, FIG. 2 is a partial perspective view illustrating how antennas forming parts of the wireless system shown in FIG. 1 are mounted in the vehicle, and FIG. 3 is a partial cross sectional view of an instrument panel having an area closer to a driver's seat at which a low frequency external communication antenna is mounted in the vehicle.

In FIGS. 1 to 3, the vehicular wireless system 17 is shown as including an on-vehicle transmitter and receiver device 18 and a portable transmitter and receiver unit 19 adapted to be coupled to the on-vehicle transmitter and receiver device 18. The portable transmitter and the receiver unit 19 is located within a given communication area to achieve radio communication with the on-vehicle transmitter and receiver device 18 for various purposes to be described in detail hereinafter. The on-vehicle transmitter and receiver device 18 is comprised of a door request switch 20, an engine start switch 21, a door lock actuator 22, a steering lock actuator 23, an engine drive control device 24, an input interface 25, a CPU (microcomputer) 26, a memory 27, a driver circuitry 28, an output control circuitry 29, a low frequency amplifier circuitry 30, a low frequency receiver circuitry 31, a high frequency receiver circuitry 32, a first low-frequency external communication antenna (a driver-side transmitter and receiver antenna) 33a, a second low-frequency external communication antenna (an assistant-driver-side transmitter and receiver antenna) 33b, a high frequency antenna 34, an internal communication antenna (an internal transmission antenna) 35, and changeover circuits 36a, 36b. The portable transmitter and receiver unit 19 is comprised of a transponder 38 and a key-less circuitry (typically referred to as a passive keyless type circuitry or a smart entrance type circuitry) 39.

More particularly, as shown in FIG. 2, the door request switch 20 is mounted to a door knob of a vehicle 15 to allow the door knob to be operatively pressed from an outside of a vehicle compartment VC and is adapted to be used to indicate a driver's will to unlock a door of the vehicle or lock the door. Also, the door request switch 20 responds to driver's pressing operation being terminated and delivers an ON signal to the CPU 26 via the interface 25.

Further, the engine start switch 21 is mounted to an instrument panel A in front of a driver's seat and responsive to driver's pressing operation during startup of an engine for delivering an ON signal to the CPU 26 via the interface 25.

The door lock actuator 22 is applied with a door lock and unlock signal from the CPU 26 via the driver circuitry 28 to lock the door or unlock the door.

The steering lock actuator 23 is applied with a steering lock and unlock signal from the CPU 26 via the driver circuitry 28 to lock or unlock a steering wheel. Also, the locking and unlocking operations of the steering wheel are executed in synchronism with the locking and unlocking operations of the door, respectively.

The engine drive control device 24 is adapted to respond to an engine startup permit signal applied from the CPU 26 via the driver circuitry 28.

The CPU 26 has a transmitting signal generating section 26a and a decoding and controlling section 26b and is adapted to be applied with the ON signals from the door request switch 20 or the engine start switch 21 via the interface circuitry 25 while receiving various signals, such as ID code serving as an identifier signal SI identifying the portable transmitter and receiver unit 19, from the portable transmitter and receiver unit 19 via the low frequency receiver circuitry 31 and the high frequency receiver circuitry 32 to implement various operations which will be described below in detail.

Further, upon receipt of the ON signal from the door request switch 20, the CPU 26 delivers a low frequency request signal SR, which is for a relatively low frequency and requires the ID code, to the low frequency external communication antenna 33a, 33b via the low frequency amplifier circuitry 30 and the changeover circuitries 36a, 36b, with the low frequency request signal SR being also able to be supplied to the low frequency internal communication antenna 35 while, at the same time, permitting the identifier signal SI received at the high frequency antenna 34 to be applied to the decoding and controlling section 26b via the high frequency receiver circuitry 32. Here, the CPU 26 allows a first transistor 36aa to be turned on to connect contacts a, b of the changeover circuitry 36a.

Furthermore, upon receipt of the ON signal from the engine start switch 21, the CPU 26 allows the first transistor 36aa to be turned on to connect contacts the a, b of the changeover circuitry 36a and allows a second transistor 36bb to be turned on to connect contacts a, c of the changeover circuitry 36b, respectively, for permitting the low frequency request signal SR, acquiring the ID code, to be supplied to the low frequency internal communication antenna 35 via the changeover circuitry 36a while, at the same time, permitting the identifier signal SI received at the high frequency antenna 34 to be applied to the decoding and controlling section 26b via the high frequency receiver circuitry 32. In such a case also, the low frequency request signal SR can be supplied to the low frequency external communication antenna 33a, 33b.

The memory 27 serves to store various data such as ID codes for the transponder 38 and the keyless circuitry 39 and is responsive to commands from the CPU 26 to deliver desired data, such as data for the transponder 38 or the keyless circuitry 39, to the CPU 26. That is, such data for the transponder 38 include ID code for the transponder 38, data on which the low frequency request signal is prepared and data on which an electromagnetic wave is prepared for applying an electric power output (i.e., data on which a startup signal or the like is prepared), to be sent to the CPU 26 in response to the commands from the CPU 26. Also, such data for the keyless circuitry 39 include ID code for the keyless circuitry 39 and data on which the low frequency request signal is prepared, to be sent to the CPU 26 in response to the commands from the CPU 26.

Upon receipt of the low frequency request signal for a weak electromagnetic wave, which has relatively small intensity, from the CPU 26, the output control circuitry 29 serves to output a control signal having a gain determined to be half of a normal gain with respect to the low frequency amplifier circuitry 30.

The low frequency amplifier circuitry 30 is supplied with the low frequency request signals for the weak electromagnetic wave, which has the relatively small intensity, and a strong electromagnetic wave, which has relatively large intensity, respectively, from the CPU 26. That is, when applied with the low frequency request signal for the weak electromagnetic wave from the CPU 26, the low frequency amplifier circuitry 30 serves to supply the low frequency external communication antennas 33a, 33b with a limited electric current output that is half in magnitude of a normal electric current output which is provided when received with the low frequency request signal for the strong electromagnetic wave from the CPU 26.

The low frequency receiver circuitry 31 is connected to the low frequency external communication antennas 33a, 33b serving as receiver antennas, respectively, to receive ID code at the low frequency from the transponder 38. With such configuration, the low frequency receiver circuitry 31 is activated in response to the command signal from the CPU 26 only when the CPU 26 is supplied with the ON signal from the engine start switch 21. On the other hand, when the low frequency request signals are supplied to the low frequency external communication antennas 33a, 33b from the CPU 26, that is, when supplied with the ON signal from the door request switch 20, the low frequency receiver circuitry 31 is adapted to receive the command signal from the CPU 26 to forcibly interrupt operation to preclude the ID code at the low frequency from being inputted to the low frequency receiver circuitry 31.

The high frequency receiver circuitry 32 is applied with ID code at a relatively high frequency and control signals supplied through the high frequency antenna 34 from the keyless circuitry 39 and delivers these signals to the coding and controlling unit 26b of the CPU 26.

Further, as shown in FIG. 2, the low frequency external communication antennas 33a, 33b are mounted to an inner wall surface at both ends of the instrument panel A of the vehicle in a way invisible from the outside. In particular, the low frequency external communication antenna 33a is mounted to the instrument panel A at an area closer to the driver's seat to output the low frequency request signal SR and a low frequency electric power signal SP while receiving ID code at the low frequency delivered from the transponder 38. Also, the low frequency external communication antenna 33b is mounted to the instrument panel at an area closer to the assistant passenger's seat to achieve similar purposes.

More specifically, as shown in FIG. 3, an outer wall surface of the instrument panel A is formed with a concave portion B, which has an anti-drop stepped portion b at an area wherein the low frequency external communication antenna 33a is mounted to the area closer to the driver's seat, such that, when the portable transmitter and receiver unit 19 becomes unusable due to a so-called dead battery resulted from its certain discharge, the portable transmitter and receiver unit 19 is adapted to be placed in the concave portion B to allow a distance between the transponder 38 of the portable transmitter and receiver unit 19 and the low frequency external communication antenna 33a to lye in a short range of several centimeters, for thereby enabling wireless communication between the transponder 38 and the low frequency external communication antenna 33a through the use of the weak electromagnetic wave from the low frequency external communication antenna 33a, even if the battery is discharged and the portable transmitter and receiver unit 19 is unusable.

The high frequency antenna 34 is mounted on the same circuit substrate, as shown with an enclosed area determined by additional dotted lines in FIG. 1, as that provided with the circuitry of the on-vehicle transmitter and receiver device 18 and receives the signal, such as ID code, from the keyless circuitry 39 of the portable transmitter and receiver unit 19 in a manner set forth above for thereby supplying the same to the CPU 26.

As previously described above, the portable transmitter and receiver unit 19 is comprised of the transponder 38 and the keyless circuitry 39, and the transponder 38 is adapted to be respond to the low frequency electric power signal from the low frequency external communication antennas 33a, 33b for outputting ID code, forming the identifier signal SI, at the low frequency. Also, the keyless circuitry 39 is adapted to receive the low frequency request signals from the low frequency external communication antennas 33a, 33b and the internal communication antenna 35 mounted on the vehicle and outputs the identifier signal SI, such as ID code, at a high frequency. In addition to ID code, the portable transmitter and receiver unit 19 can be operative to transmit a door lock and unlock control signal, an engine start control signal and a steering lock and unlock control signal to the transmitter and receiver device 18.

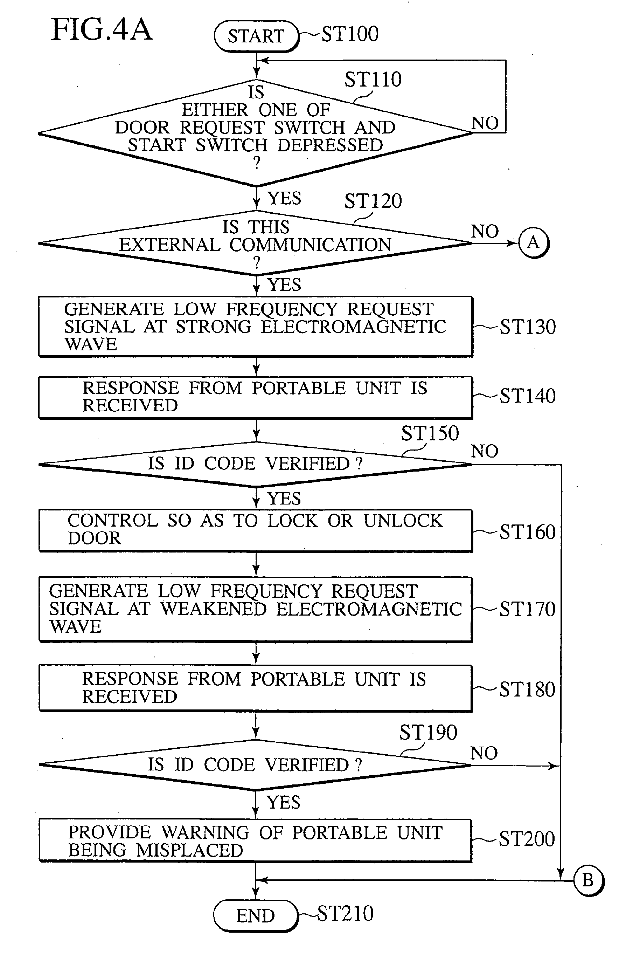

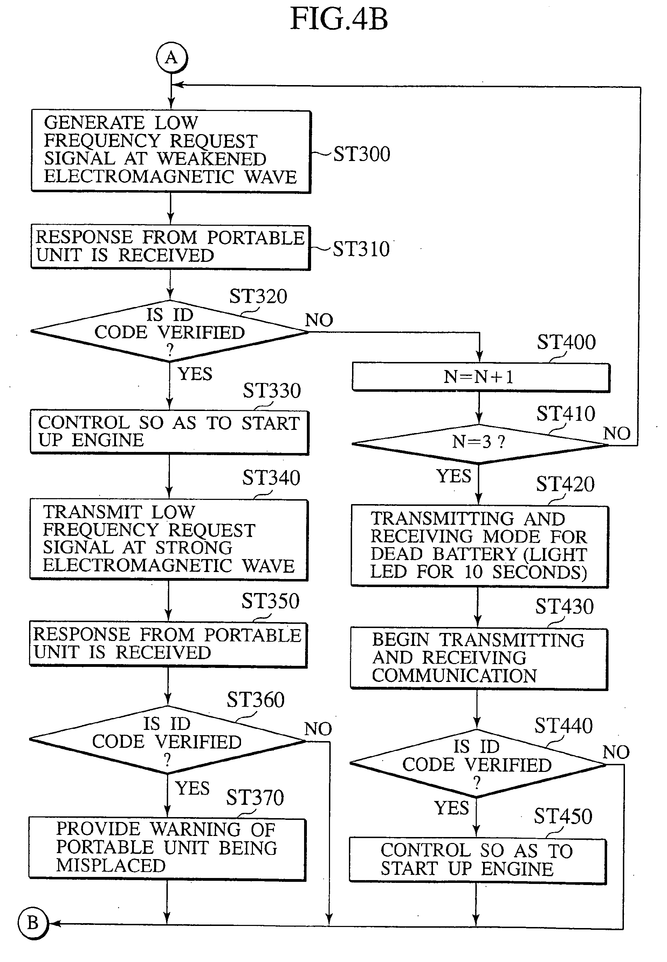

Although the CPU 26 has been partly described above, the CPU 26 also has a door lock and unlock control function, an engine start control function and a warning function for warning the driver with a key being misplaced inside the vehicle compartment, with these functions being described below in detail with reference to a flowchart shown in FIGS. 4A and 4B.

### (Door Lock and Unlock Control Function)

As shown in FIGS. 4A and 4B, when the power source is turned on, operation proceeds from step ST100 for auto-start to step ST110 for discriminating whether the door request switch 20 has been actuated to open the door or whether the engine start switch 21 has been rotationally actuated to start up the engine. When such discrimination is terminated such that either one of these start switches has been actuated, then, operation goes to subsequent step ST120 to utilize verified results related to the door request switch 20 and the engine start switch 21 in step ST110. If it is discriminated that the door request switch 20 has been actuated, then, operation proceeds to step ST130 for enabling external wireless communication, whereas if it is discriminated that the engine start switch 21 is operated, then, operation goes to step ST 300 for enabling internal wireless communication.

Here, in a case where operation proceeds to step ST 130, since the transmitting signal generating section 26a of the CPU 26 is supplied with the ON signal from the door request switch 20, the transmitting signal generating section 26a of the CPU 26 retrieves data, related to the keyless circuitry 39, from the memory 27 and prepares the low frequency request signal for the strong electromagnetic wave to acquire ID code from the keyless circuitry 39, while activating the output control circuitry 29 so as to change over the low frequency amplifier circuitry 30 in an increased amplification such that the low frequency antennas 33a, 33b are enabled to transmit the low frequency request signals of the strong electromagnetic wave to cause these signals to be outputted to given communication areas outside the vehicle compartment.

In succeeding step ST140, the keyless circuitry 39 of the portable transmitter and receiver unit 19 responds to the low frequency request signal of such a strong electromagnetic wave and then outputs ID code, as the identifier signal, and the door lock control signal at the high frequency, which are inputted through the high frequency antenna 34 and the high frequency receiver circuitry 32 to the decoding and controlling section 26b of the CPU 26.

In subsequent step ST150, the decoding and controlling section 26b of the CPU 26 serves to verify whether ID code, which forms one of data associated with the keyless circuitry 39, stored in the memory 27, matches ID code transmitted from the portable and receiver unit 19. If such a match is verified, then it is discriminated that the portable transmitter and receiver unit 19 carried by the driver is located in the given communication area outside the vehicle compartment, and operation proceeds to step ST160 where the door lock control signal is supplied to the door lock actuator 22 to unlock the door (when in next time, if operation is routed to this step, the door is brought into a locked condition).

If no matching between ID codes appears in step ST150, then it is discriminated such that the door request switch 20 is erroneously operated in a practical joke or the like made by someone under the absence of portable transmitter and receiver unit 19, and operation proceeds to step ST210 where operation is terminated.

Further, when the door lock control is terminated in the above step ST160, operation is routed to step ST170 where in stead of the low frequency request signal of the strong electromagnetic wave, the low frequency request signal of the weak electromagnetic wave is outputted from the low frequency internal communication antenna 35, while activating the output control circuitry 29 so as to change over the low frequency amplifier circuitry 30 in a decreased amplification.

In subsequent step ST180, ID code at the high frequency, which is responded from the keyless circuitry 39 of the portable transmitter and receiver unit 19 in response to the low frequency request signal of the weak electromagnetic wave, is received by the high frequency antenna 34 and inputted again to the decoding and controlling section 26b of the CPU 26. When this takes place, operation proceeds to step ST190.

In succeeding step ST190, when this takes place, comparison of ID codes is carried out in the same manner as set forth above. In the presence of matching between ID codes, operation proceeds to step ST200.

In subsequent step ST200, it is discriminated that the portable transmitter and receiver unit 19 has been left in the vehicle compartment and the warning indicator such as a lamp or buzzer is activated to provide the driver with the warning indicative of "the portable transmitter and receiver unit 19 being misplaced in the vehicle compartment" whereupon operation goes to step ST210 where operation is terminated. Further, on the other hand, when riding into the vehicle compartment, since operations up to step ST190 are executed before the driver gets on the vehicle, in step ST190, it is discriminated that no matching appears between ID codes and operation is routed directly from step ST190 to step ST210 where operation is terminated.

### (Engine Start Control Function)

This function is executed when it is discriminated that, in step ST110, the engine start switch 21 has been rotationally operated for the purpose of starting up the engine, and it is discriminated that, in step ST120, the internal wireless communication is to be utilized.

That is, in step ST300, when the engine start switch 21 is operated with a view to start up the engine to cause the CPU 26 to be supplied with the ON signal, the transmitting signal generating section 26a of the CPU 26 serves to prepare the low frequency request signal for the weak electromagnetic wave in dependence on data, associated with the keyless circuitry 39, retrieved from the memory 27, and the low frequency request signal of the weak electromagnetic wave is outputted from the low frequency internal communication antenna 35 to the portable transmitter and receiver unit 19.

In subsequent step ST310, the portable transmitter and receiver unit 19 responds to such a low frequency request signal of the weak electromagnetic wave and supplies ID code at the high frequency from the keyless circuitry 39 to the decoding and controlling section 26b of the CPU 26 via the high frequency antenna 34 and the high frequency receiver circuitry 32.

When this-takes place, in succeeding step ST320, the decoding and controlling section 26b verifies whether matching between ID codes exists and, if matching appears between ID codes, then operation goes to step ST330.

In succeeding step ST330, where the engine start permit signal is supplied to the engine drive control device 24 to start up the engine whereupon operation proceeds to step ST340. Also, in step ST320, if no matching between ID code transmitted at the high frequency and ID code retrieved from the memory 27 is verified, then operation proceeds to step ST400.

In step ST340, the transmitting signal generating section 26a of the CPU 26 serves to prepare the low frequency request signal for the strong electromagnetic wave, in dependence on data associated with the keyless circuitry 39 retrieved from the memory 27, which in turn is outputted from the low frequency external communication antennas 33a, 33b to the portable transmitter and receiver unit 19.

In subsequent step ST350, the portable transmitter and receiver unit 19 responds to such a low frequency request signal of the strong electromagnetic wave and supplies ID code at the high frequency from the keyless circuitry 39 to the decoding and controlling section 26b of the CPU 26 via the high frequency antenna 34 and the high frequency receiver circuitry 32.

When this takes place, in step ST360, the decoding and controlling section 26b verifies matching between ID codes and, if matching exists between ID codes, then operation goes to step ST370.

In subsequent step ST370, after getting on the vehicle, if the driver erroneously hands over the portable transmitter and receiver unit 19 to a person who sends off at the outside of the vehicle, then the warning is executed by the lamp to indicate that the portable transmitter and receiver unit 19 has been left outside the vehicle compartment. And then, operation is terminated in step 210. Also, on the other hand, in step ST360, if no matching occurs between two ID codes, that is, when encountered with a difficulty in acceptable collating of ID codes, it is discriminated such that the portable transmitter and receiver unit 19 which the driver carries has been left inside the vehicle compartment after getting on the vehicle, and operation is terminated in step 210.

### (Dead-Battery Backup Function)

This function is executed at timings subsequent to step ST400 in a case where it is discriminated that it becomes hard to read out ID code at the high frequency from the portable transmitter and receiver unit 19 in step ST310 with a resultant difficulty in verifying ID codes in step ST320, or in a case where there is no matching between relevant ID code and ID code stored in the memory 27 in step ST320.

First, step ST400 represents count step, that is, step to count how many times operational loops, each composed of steps ST 300 to ST 320 and step ST410, are repetitively executed, and with this loop, if there is no matching between relevant ID codes, repetitive operations for trials are carried out for three times, for example. That is, if the number of times is discriminated to reach three times in step ST410, then in step ST420, a light emitting diode disposed inside a meter case is lighted on for a given time period of, for instance, ten seconds to provide the driver with a warning of the dead battery, thereby providing the driver with information of a difficulty of engine startup before ID code of the transponder 38 is matched with relevant ID code.

Upon getting such information, the driver takes action to carry and place the portable transmitter and receiver unit 19 onto the concave portion B formed at the front side of the instrument panel A at the area, near the corner of the driver's seat, where the low frequency external communication antenna 33a is located and manually and rotationally operate the engine start switch 21.

As a result of such communication, operation proceeds to succeeding step ST 430 such that the transmitting signal generating section 26a of the CPU 26 begins to prepare the low frequency electric power signal for the weak electromagnetic wave in response to data, associated with the transponder 38, stored in the memory 27, and the low frequency electric power signal of the weak electromagnetic wave is outputted from the low frequency external communication antenna 33a to the portable transmitter and receiver unit 19.

In subsequent step ST440, ID code transmitted at the low frequency from the transponder 38 of the portable transmitter and receiver unit 19 is inputted to the decoding and controlling section 26b of the CPU 26 via the low frequency external communication antenna 33a and the low frequency receiver circuitry 31. When this takes place, the decoding and controlling section 26b verifies matching between ID codes and, if matching appears between ID codes, then operation goes to step ST450 where the steering unlock control signal is supplied to the steering lock actuator 23 to effectuate unlocking while supplying the engine drive control device 24 with the engine start permit signal to start up the engine. Subsequently, operation proceeds to step ST210 where operation is terminated.

If there is no matching between two ID codes at the low frequency in step ST440, operation proceeds to step ST210 where operation is terminated.

### (Second Embodiment)

Next, a second embodiment according to the present invention is described.

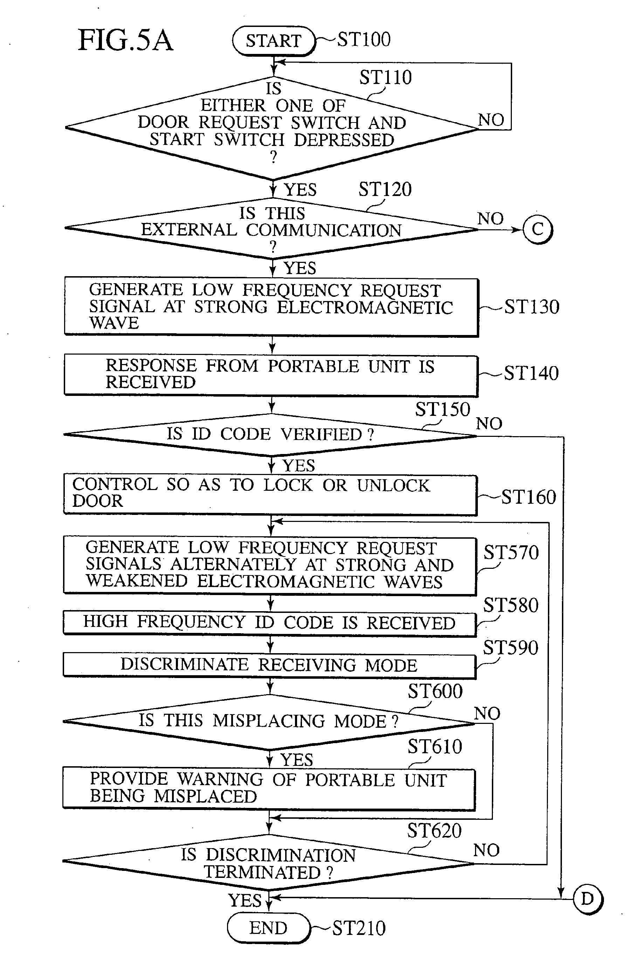

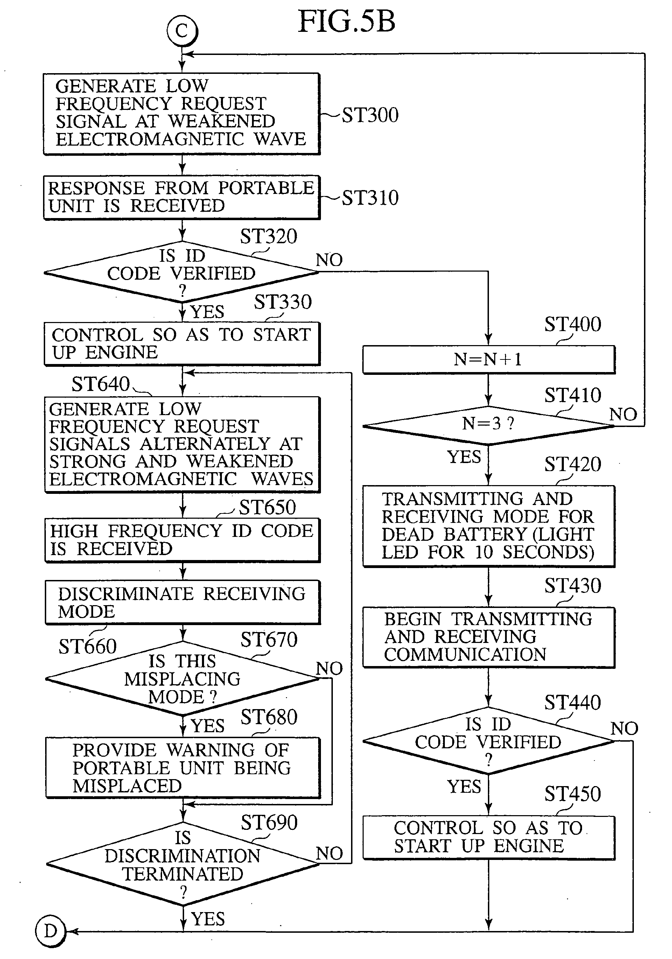

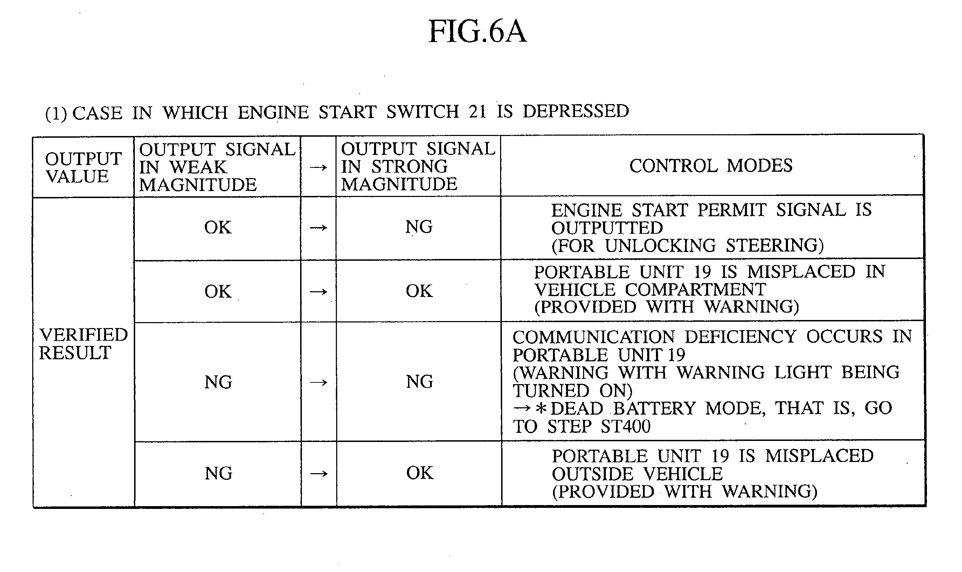

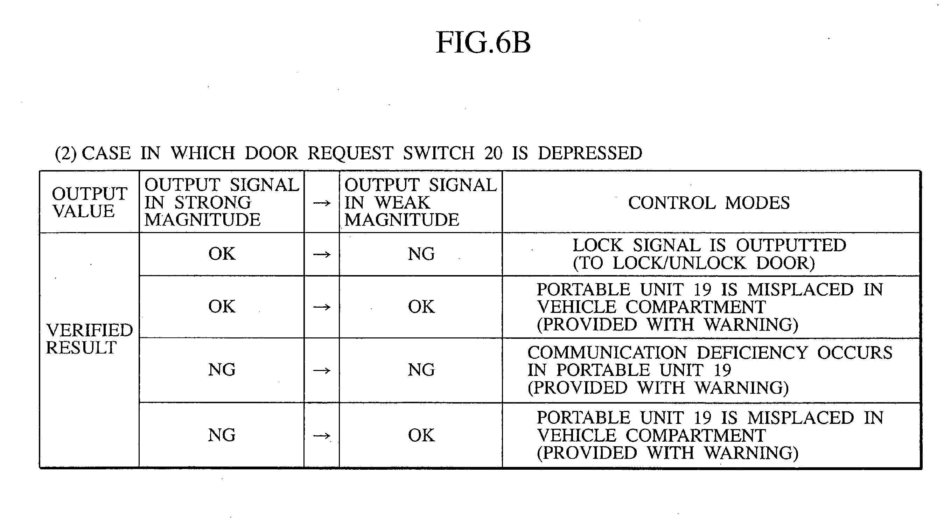

A wireless system of the presently filed embodiment has the same structure as that shown in FIG. 1 and differs from the first embodiment except for the programmed operation of the CPU 26 and so, the operation including a differing feature specifically related to steps ST570 to ST620 and steps ST640 to ST690 is described below in detail with reference to a flowchart of FIGS. 5A and 5B and also Tables of FIGS. 6A and 6B.

### (Door Lock and Unlock Control Function)

As shown FIGS. 5A and 5B, when the power source is turned on, operation proceeds from step ST100 to step ST 110 where operation is waited until the door request switch 20 is actuated for opening the door or until the engine start switch 21 is rotationally actuated to start up the engine. When it is discriminated that either one of these start switches has been actuated in step ST 110, flow proceeds to step ST120 and it is discriminated whether operation has been initiated outside the vehicle compartment or inside the same. That is, in step ST120, it is actually discriminated whether the door request switch 20 has been actuated for opening the door or whether the engine start switch 21 has been rotationally actuated to start up the engine.

Here, in step ST120, if it is discriminated that the door request switch 20 has been operated at an area outside the vehicle compartment, the transmitting signal generating section 26a of the CPU 26 retrieves data for the keyless circuitry 39 from the memory 27 and prepares the low frequency request signal for the strong electromagnetic wave which in turn is outputted to the area outside the vehicle compartment via the low frequency external communication antennas 33a, 33b in step ST130.

In succeeding step ST 140, the keyless circuitry 39 of the portable transmitter and receiver unit 19 responds to the low frequency request signal of such a strong electromagnetic wave and outputs ID code and the door lock control signal both at the high frequency outputs, which are inputted through the high frequency antenna 34 and the high frequency receiver circuitry 32 to the decoding and controlling section 26b of the CPU 26.

In subsequent step ST 150, the decoding and controlling section 26b of the CPU 26 serves to compare ID code, which is included in data associated with the keyless circuitry 39 and stored in the memory 27, with ID code received at the high frequency output. If there is matching between these ID codes, flow proceeds to step ST160 where the door lock control signal is supplied to the door lock actuator 22 to unlock the door (when in next time, if operation is routed to this step, the door is brought into a locked condition). If there is no matching between two ID codes, then flow is routed to step ST210 where operation is terminated.

In step ST160, when the door lock control is terminated, flows in a loop between step ST570 and step ST620 are repetitively executed a plurality of times until the discrimination in step ST620 is terminated such that, each time flow proceeds to step ST570, the low frequency request signals are alternately prepared for the weak and strong electromagnetic waves to allow the low frequency request signals to be alternately outputted with the strong and weak electromagnetic waves via the low frequency external communication antennas 33a, 33b and the internal communication antenna 35, respectively, whereupon ID code received at the high frequency output is again inputted to the coding and controlling unit 26b to check whether ID code inputted at the high frequency output is matched with ID code contained in data for keyless stored in the memory 27(steps ST580 and ST590). That is, as represented in Table shown in FIG. 6B, in dependence on verified results indicative of "matching (OK)" or "non-matching (NG)" between ID codes, control modes are selected to achieve various functions, including a function to output the door lock control signal (i.e., to lock or unlock the door), a function to discriminate where the portable transmitter and receiver unit 19 is located, and a function to provide the driver with the warning indicative of wireless communication deficiency (inclusive of warning of non-matching between ID codes).

When such discrimination is terminated, in step ST600, comparison is executed between ID code received at the high frequency in the presence of the low frequency request signal of the weak electromagnetic wave, that is, ID code received at the high frequency from the portable transmitter and receiver unit 19 that would remain in the vehicle compartment, and ID code contained in data associated with the keyless circuitry 39. If matching between two ID codes exists, then it is discriminated that "the portable transmitter and receiver unit 19 is misplaced within the vehicle compartment" to provide the warning in step ST610 and, thereafter in succeeding step ST620, discrimination is made to check whether all of the discrimination steps have been completed whereby when it is discriminated that the all discriminations are terminated, flow is routed to step ST210 where operation is terminated. Also, in step ST620, if all of the discrimination are not yet finished, flow is directly routed to step ST570 to continue the operation set forth above.

### (Engine Start Control Function)

This function is executed after it is discriminated that, in step ST120 where communication is executed inside the vehicle compartment, the engine start switch 21 has been rotationally operated for the purpose of starting up the engine.

That is, when the engine start switch 21 is operated with a view to start up the engine to cause the CPU 26 to be supplied with the ON signal, the transmitting signal generating section 26a of the CPU 26 serves to prepare the low frequency request signal for the weak electromagnetic wave, in dependence on data for the keyless circuitry 39 retrieved from the memory 27, which in turn is outputted from the low frequency internal communication antenna 35 in step ST300.

In subsequent step ST310, the portable transmitter and receiver unit 19 responds to such a low frequency request signal of the weak electromagnetic wave and supplies ID code at the high frequency output from the keyless circuitry 39 to the decoding and controlling section 26b of the CPU 26 via the high frequency antenna 34 and the high frequency receiver circuitry 32. When this takes place, the decoding and controlling section 26b discriminates whether there is matching between ID code stored in the memory 27 and received ID code in step ST320 and, if matching between ID codes exists, then operation goes to step ST330 where the engine start permit signal is supplied to the engine drive control device 24 to start up the engine. Also, in step ST320, if the ID code signal at the high frequency can not be retrieved or if there is no matching between ID code at the high frequency and ID code retrieved from the memory 27, then operation proceeds to step ST400.

When step ST330 is terminated, flows of a loop between step ST640 and step ST690 are repetitively executed a plurality of times until the discrimination in step ST690 is terminated.

Each time flow proceeds to step ST640, the low frequency request signals are alternately prepared for the weakened and strong electromagnetic waves to allow the low frequency request signals to be alternately outputted of the strong and weak electromagnetic waves via the low frequency external communication antennas 33a, 33b and the internal communication antenna 35, respectively, whereupon, in step ST650, the signals transmitted from the portable transmitter and receiver unit 19 are correspondingly received and, in step ST660, discrimination is made to check whether ID code received at the high frequency output is coincided with ID code contained in data for keyless stored in the memory 27. That is, as represented in Table shown in FIG. 6A, in dependence on verified results indicative of "matching (OK)" or "non-matching (NG)" between ID codes, control modes are selected to achieve various functions, including a function to output the engine start permit signal (i.e., to unlock the steering wheel), a function to discriminate where the portable transmitter and receiver unit 19 is located, and a function to provide the driver with the warning indicative of wireless communication deficiency (inclusive of warning of non-matching between ID codes).

After judgment in step ST660 is terminated, operation is implemented to check whether coincidence appears between ID code received at the high frequency when transmitted with the low frequency signal of the strong electromagnetic wave, that is, ID code received at the high frequency output when the portable transmitter and receiver unit 19 is deemed to be placed in the area outside the vehicle compartment, and ID code contained in data for the keyless circuitry 39 stored in the memory 27 in step ST670. If coincidence exists in ID codes, then the warning is executed instep ST680 to indicate that the driver erroneously hands over the portable transmitter and receiver unit 19 to a person who sends off at the outside of the vehicle and the portable transmitter and receiver unit 19 remains in the area outside the vehicle compartment, whereupon operation proceeds to step ST690 where judgment is executed to check whether whole of the judgments have been completed and if not, then operation is routed back to step ST640. Also, in step ST690, if it is discriminated that all of the judgments have been completed, flow proceeds to step ST210 where operation is terminated.

### (Dead-Battery Backup Function)

This function is executed in a sequence subsequent to step ST400 where operation is executed because of the fact that, in step ST310, it becomes hard to read out ID code received at the high frequency to cause a difficulty in comparing ID codes in step ST320 or that there is no matching between relevant ID code and ID code stored in the memory 27 in step ST320.

That is, if the check in step ST320 is not satisfied with "NO", the loops of steps ST300, ST310, ST320, ST400, ST410 are executed several number of times, for instance, three times in this example to try communication. That is, these repetitive operations are carried out by implementing counting operation step in step ST400 and a count result discriminating step in step ST410 such that, in step ST410, if the count has reached a preset numeric value of for instance 3, it is then discriminated to be impossible to perform communication. When this takes place, flow proceeds to step ST420, and the light emitting diode disposed inside the meter case is lighted on to wait for a prescribed time interval of, for instance, 10 seconds for providing the driver with the warning of the dead battery while urging the driver to place the portable transmitter and receiver unit 19 onto the concave portion B, which is formed at the front area of the instrument panel A where the low frequency external communication antenna 33a is located, and to manually operate the engine start switch 21.

During such a wait time, if the portable transmitter and receiver unit 19 is placed onto the concave portion B of the instrument panel A and the engine start switch 21 is operated, then the CPU 26 is supplied with the ON signal. As a result of this operation, operation proceeds to succeeding step ST 430 such that the transmitting signal generating section 26a of the CPU 26 begins to prepare the low frequency electric power signal for the weak electromagnetic wave, in response to data of the memory 27 for the transponder 38, which in turn is outputted from the low frequency external communication antenna 33a.

In subsequent step ST440, ID code received at the low frequency responding from the transponder 38 of the portable transmitter and receiver unit 19 is inputted to the decoding and controlling section 26b of the CPU 26 via the low frequency external communication antenna 33a and the low frequency receiver circuitry 31. When this takes place, the decoding and controlling section 26b checks to see whether there is matching between ID code stored in the memory 27 and received ID code and, if matching exists, then operation goes to step ST450 where the engine drive control device 24 is applied with the engine start permit signal to start up the engine. On the contrary, in step ST440, if there is no matching between low frequency ID code and ID code stored in the memory 27, operation proceeds to step ST210 where operation is terminated.

Also, in step ST410 each of the embodiments set forth above, it is to be understood that, if matching between ID codes is discriminated to be unavailable even in the presence of wireless communication being performed a given number of times, i.e., three times, then it is discriminated that the portable transmitter and receiver unit 19 per se is not proper one and, in step ST420, the wait time expires such that flow can proceed to step ST210 where operation is terminated.

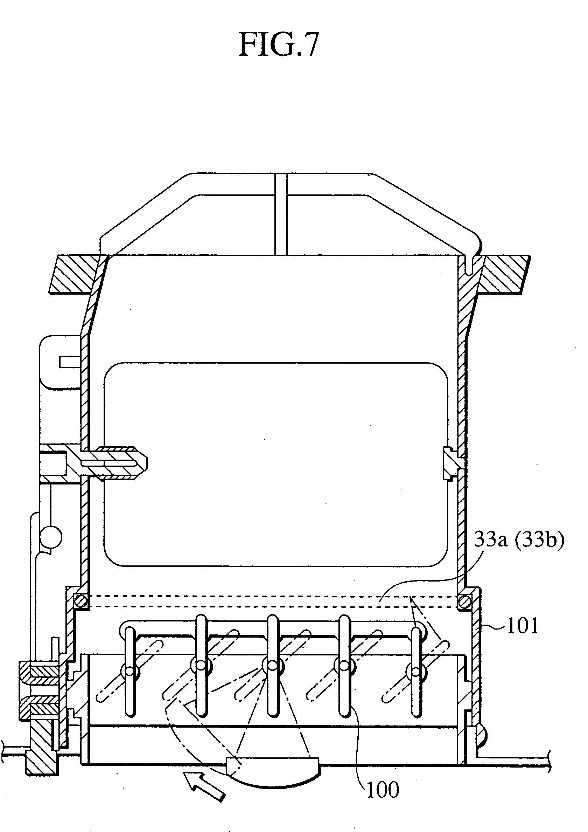

Also, while the embodiments set forth above have been described in conjunction with a particular configuration where the low frequency antennas 33a, 33b are mounted on the inner wall surfaces at the both ends of the instrument panel A of the vehicle, it is to be understood that the low frequency antennas 33a, 33b may be unitarily formed, by insert-formation, with a frame 101 that is made of resin to support a louver 100 mounted at air blow-off openings formed at the both ends of the instrument panel A as shown FIG. 7.

With the radio frequency (wireless) communication system embodying the present invention, the low frequency antennas are mounted at the both terminal ends, of the instrument panel of the vehicle, closer to the windows where electronic component parts and associated wire harnesses are collectively located and which is easy to provide a structure to allow the antennas are mounted, resulting in an ease for the electromagnetic waves to be emitted to the areas outside the vehicle compartment while providing an ease of distributing the wire harnesses and contributing to reduction in costs.

Further, in the presence of the dead battery, merely placing the portable transmitter and receiver unit onto the instrument panel allows the antennas and the transponder to be enabled for communication, with a resultant capability for every person to achieve proper operation with no trouble.

The entire content of a Patent Application No. TOKUGAN 2002-70780 with a filing date of March 14, 2002 in Japan is hereby incorporated by reference.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

## Claims

1. A wireless device for a vehicle having an instrument panel, comprising:
a portable transmitter and receiver unit having a transponder and a keyless circuitry adapted to transmit an identifier signal, indicative of an identifier identifying the portable transmitter and receiver unit; and
an on-vehicle transmitter and receiver device having antennas and a controller, adapted to communicate with the portable transmitter and receiver unit through the antennas while the portable transmitter and receiver unit is located in a given communication area, and operative to transmit an identifier request signal to the portable transmitter and receiver unit requesting the portable transmitter and receiver unit to transmit back to the controller the identifier signal for checking whether the identifier of the portable transmitter and receiver unit is proper,
wherein upon verification by the controller that the identifier of the portable transmitter and receiver unit is performed, the controller is responsive to open or close a door of a vehicle and to permit an engine of the vehicle to be started up,
and wherein at least one of the antennas is mounted at a terminal end of an instrument panel of the vehicle.

2. The wireless device according to claim 1, wherein the terminal end of the instrument panel includes a concave portion to allow the portable transmitter and receiver unit to be placed therein to enable wireless communication between the at least one of the antennas and the transponder through an electric power signal transmitted from the on-vehicle transmitter and receiver device.

3. The wireless device according to claim 2, wherein the at least one of the antennas is mounted on an inner wall surface of the instrument panel.

4. The wireless device according to claim 2, wherein the at least one of the antennas is unitarily formed with a frame member to support a louver mounted at an air blow-off opening of the instrument panel.

5. The wireless device according to claim 1, wherein the controller includes a transmission signal generating section, which is operative to perform wireless communication either in an external communication mode or in an internal communication mode in dependence on a status of the portable transmitter and receiver unit, and a decoding and controlling section operative to perform the verification of the identifier of the portable transmitter and receiver unit.

6. The wireless device according to claim 5, wherein the controller changeovers the antennas in dependence on the status of the portable transmitter and receiver unit and a status of the verification of the identifier of the portable transmitter and receiver unit.

7. A wireless device for a vehicle having an instrument panel, comprising:
a portable transmitting and receiving means for transmitting an identifier signal indicative of an identifier identifying the portable transmitting and receiving means and receiving an identifier request signal; and
an on-vehicle transmitting and receiving means for transmitting the identifier request signal to the portable transmitting and receiving means and receiving the identifier signal from the portable transmitting and receiving means, at least a part of the on-vehicle transmitting and receiving means being mounted at a terminal end of an instrument panel of a vehicle,
wherein when a wireless communication between the portable transmitting and receiving means and the on-vehicle transmitting and receiving means is to be performed within the vehicle, and when the identifier of the portable transmitting and receiving means is not verified, the portable transmitting and receiving means is located in the vicinity of the at least a part of the on-vehicle transmitting and receiving means mounted at the terminal end of the instrument panel of the vehicle.

8. A method of performing wireless communication for a vehicle having an instrument panel, the method comprising:
preparing a portable transmitter and receiver unit transmitting an identifier signal indicative of an identifier identifying the portable transmitter and receiver unit and receiving an identifier request signal;
preparing an on-vehicle transmitter and receiver device transmitting the identifier request signal to the portable transmitter and receiver unit and receiving the identifier signal from the portable transmitter and receiver unit;
mounting at least a part of the on-vehicle transmitter and receiver device at a terminal end of an instrument panel of a vehicle; and
locating the portable transmitter and receiver unit in the vicinity of the at least a part of the on-vehicle transmitter and receiver unit mounted at the terminal end of the instrument panel of the vehicle, when a wireless communication between the portable transmitter and receiver unit and the on-vehicle transmitter and receiver device is to be performed within the vehicle, and when the identifier of the portable transmitter and receiver unit is not verified.
